# EUROPEAN PATENT SPECIFICATION

(11) **EP 0 360 378 B1**
(45) Date of publication and mention of the grant of the patent: **14.07.1993**
(21) Application number: 89305225.8
(22) Date of filing: 23.05.1989
(51) Int. Cl.: B60T 8/34, F16L 55/04, B60T 13/12

(54) **Vehicle braking systems**
Kraftfahrzeugbremssysteme
Systèmes de freinage pour véhicule

(30) Priority: 20.09.1988 JP 235767/88
(43) Date of publication of application: 28.03.1990
(73) Proprietor: NIPPON AIR BRAKE CO., LTD., Kobe-shi Hyogo-ken (JP)
(72) Inventor: Tanaka, Ryuichi, Yokosuka-shi Kanagawa-ken (JP)
(74) Representative: Targett, Kenneth Stanley

(56) References cited:
- EP-A- 0 181 643
- DE-A- 2 643 860
- DE-A- 2 703 761
- GB-A- 2 187 521
- US-A- 4 703 979
- ÖLHYDRAULIK UND PNEUMATIK, vol. 8, no. 11, November 1964, page 421; H. SCHMIDT: "Entwicklung und heutiger Stand der hydraulischen Bremsbetätigung im Kraftfahrtzeugbau"

## Description

This invention relates to braking systems for vehicles, and in particular to such braking systems in which the transmission of pulsating fluid pressure from a braking circuit to a fluid-pressure generating source or master cylinder is limited.

Japanese Patent Application Publication No. 56-142 733 discloses a braking system for a vehicle, the braking system comprising:
a brake fluid pressure generating source;
a brake-applying apparatus for braking a wheel or wheels with brake fluid pressure supplied from said brake fluid pressure generating source;
a pulsating-pressure absorbing apparatus arranged between said brake fluid pressure generating source and said brake-applying apparatus; and
throttling means provided in said pulsating-pressure absorbing apparatus for limiting the brake fluid flowing from said brake-applying apparatus towards said brake fluid pressure generating source.

In the previously-proposed apparatus, a master cylinder acts as the brake fluid pressure generating source, and the brake-applying apparatus is in the form of one or more wheel brake cylinders. An anti-skid control valve apparatus is also provided between the master cylinder and wheel cylinder(s), with a brake relieving circuit having a fluid pressure pump for returning brake fluid under pressure discharged through the control valve apparatus from the wheel cylinder.

In the above-described previously-proposed braking system, the throttling means or throttle is fixed. It limits transmission of the pulsating pressure of the fluid pressure pump to the master cylinder. Further, there is provided a check valve which prevents brake fluid from flowing towards the master cylinder from the fluid pressure pump side. Accordingly, a second check valve is required for brake-relieving, and this permits brake fluid to flow from the wheel cylinder side to the master cylinder side.

Further, in the above-described braking system, it is preferable that the throttle should be arranged nearer to the master cylinder and that the distance between the generating source of the pulsating pressure and the throttle, and the volume of the conduit between them is larger, since transmission of the pulsating pressure of the fluid pressure pump or of the pulsating pressure generated in the brake circuit to the master cylinder can be effectively decreased. If, however, the throttle is arranged at the outlet of the master cylinder, the throttling effect occurs during both braking application and braking relief. The throttle therefore has an adverse influence both on the braking application and on the braking relief. Accordingly, it is required that the throttle should be effective only for the fluid flowing towards the master cylinder, and a check valve which permits fluid to flow from the outlet of the master cylinder is therefore provided. In that case, another check valve for brake relieving is required.

Thus, this previously-proposed vehicle braking system is large in size and complicated. The conduit construction is also complicated, and assembly is troublesome.

German patent application DE-A-2703761 discloses a braking system for a vehicle of the general type comprising:
a brake fluid pressure generating source;
a brake-applying apparatus for braking a wheel or wheels in response to brake fluid pressure supplied from said pressure generating source; and
a pulsating-pressure absorbing apparatus arranged between the pressure generating source and the brake-applying apparatus, the absorbing apparatus comprising a main body having an inlet towards the generating source and an outlet towards the brake-applying apparatus, a passageway in the body between the inlet and outlet, a plunger slidably fitted in the passageway, and moveable in response to a brake fluid pressure difference between opposite ends of the plunger, a valve member mounted in an axial hole in the plunger, a valve seat cooperating with the valve member, and throttling means for limiting brake fluid flowing from the brake-applying apparatus to the pressure generating source.

In this particular system, the throttling means is in a further passageway in the main body between a return pump and the pressure generating source, and the valve seat is fixed in that further passageway. The valve member is normally separated from the valve seat, but is closed by movement of the plunger away from the outlet when pressure is applied by the generating source to block he throttled further passageway.

The braking system of the present invention is characterised in that:
the valve seat is fixed to the plunger;
the throttling means is formed by a cut-out groove between the valve member and the valve seat;
when the plunger is disposed in a first position towards the outlet, the valve member contacts the valve seat so that the cut-out groove functions as a throttle; and
when the plunger is disposed in a second position towards the inlet, the valve member and valve seat are separated.

Preferably, the absorbing apparatus is fixed to an outlet of the pressure generating source.

In the case where the braking system further comprises an anti-skid control valve apparatus arranged between the pressure generating source and the brake-applying apparatus, and a fluid pressure pump arranged to return fluid discharged by the control valve apparatus, the pump preferably returns the fluid to a point between the control valve apparatus and the absorbing apparatus.

In order to assist the initial fitting of the braking system, the absorbing apparatus preferably further comprises holding means for holding the plunger in said second position before the braking system is initially filled with brake fluid. The holding means may comprise a C-shaped spring member which is engageable with the plunger and a stepped portion of the passageway.

A preferred embodiment of this invention, to be described in greater detail hereinafter, provides a braking system for a vehicle in which the conduit construction is not complicated by a required position of the throttle for absorbing the pulsating pressure, and the proper function of the braking operation is not deteriorated thereby.

The invention will now be described by way of example with reference to the accompanying drawings, throughout which like parts are referred to by like references, and in which:
Figure 1 is a schematic view showing the main parts of a vehicle anti-skid braking system according to an embodiment of this invention;
Figure 2 is an enlarged cross-sectional view of a pulsating-pressure absorbing apparatus in the braking system of Figure 1, in the normal state in which the anti-skid braking system is filled with brake fluid; and
Figure 3 is a view similar to that of Figure 2, but with the apparatus in the initial state in which the anti-skid braking system is not yet filled with brake fluid.

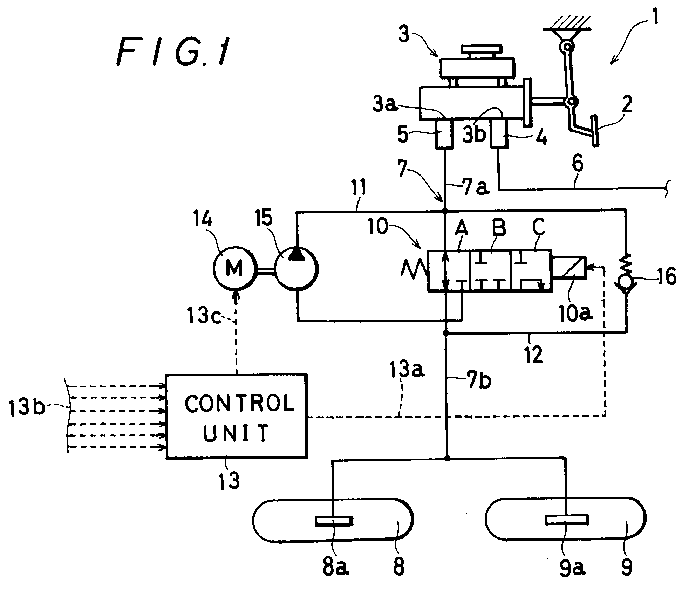

The complete anti-skid braking system embodying the invention will firstly be described with reference to Figure 1. The system 1 includes a brake pedal 2 connected to a tandem master cylinder 3 which has a known construction, and has two independent fluid pressure chambers. When the brake pedal 2 is depressed, fluid pressures are generated in the fluid pressure chambers. Pulsating-pressure damping or absorbing apparatus 4 and 5 are fixed such as by threaded coupling to respective outlet portins 3b and 3a communicating with the corresponding fluid pressure chambers of the tandem master cylinder 3.

One of the fluid pressure chambers is connected through the one pulsating-pressure absorbing apparatus 4 and a conduit 6 to front left and right wheel brake apparatus (not shown) which will be described below. The other of the fluid pressure chambers is connected through the other pulsating-pressure absorbing apparatus 5 and a conduit 7 to wheel cylinders 8a and 9a of rear left and right wheels 8 and 9.

The conduit 7 consists of a conduit portion 7a and another conduit portion 7b. An anti-skid control valve 10 is arranged between the conduit portions 7a and 7b. A brake relieving circuit 11 is connected between an outlet of the anti-skid control valve 10 and the conduit portion 7a. An auxiliary circuit 12 is connected between the conduit portions 7a and 7b in parallel with the anti-skid control valve 10.

The anti-skid control valve 10 is a three-position three-port electromagnetic valve. An output terminal 13a of a control unit 13 is connected to a solenoid portion 10a of the electromagnetic valve 10. Wheel speed sensors (not shown) associated with the wheels are connected to input terminals 13b of the control unit 13 which evaluates and measures skid conditions or rotational behaviour of the wheels on the basis of the output signals of the wheel speed sensors, in a known manner.

In a position A of the control valve 10 for increasing braking, the conduit portions 7a and 7b are made to communicate with each other and the brake relieving circuit 11 is cut off by the anti-skid control valve 10. In a position B for holding or maintaining braking, the conduit portions 7a and 7b are cut off from each other, and the brake relieving circuit 11 is also cut off by the anti-skid control valve 10. In a position C for relieving braking, the conduit portions 7a and 7b are cut off from each other, while the conduit portion 7b is made to communicate with the brake relieving circuit 11 by means of the anti-skid control valve 10.

A fluid pressure pump 15 is connected in the brake relieving circuit 11, and the pump 15 is driven by an electric motor 14 to which a drive signal is supplied from an output terminal 13c of the control unit 13. Brake fluid discharged through the anti-skid control valve 10 from the wheel cylinders 8a and 9a is pressurised and returned to the master cylinder side of the control valve 10 by the fluid pressure pump 15. A check valve 16 is connected in the auxiliary circuit 12, and this permits fluid to flow only from the wheel cylinder side towards the master cylinder side.

In Figure 1, the anti-skid braking apparatus for the front left and right wheels is not shown, but is similar to the apparatus shown in Figure 1 provided for the rear left and right wheels. However, one fluid pressure pump 15 may commonly be used for both the rear and front wheels, whereupon the pressurised brake fluid from the wheel cylinders of both the front and rear wheels will be returned to the master cylinder 3 by the one fluid pressure pump 15.

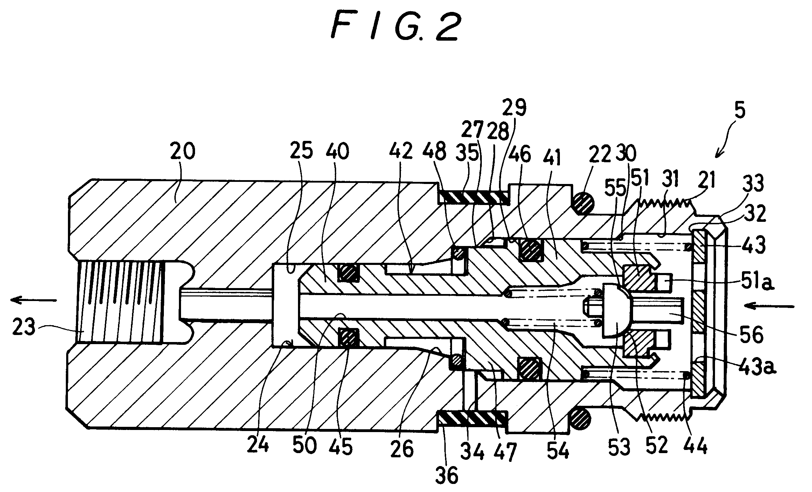

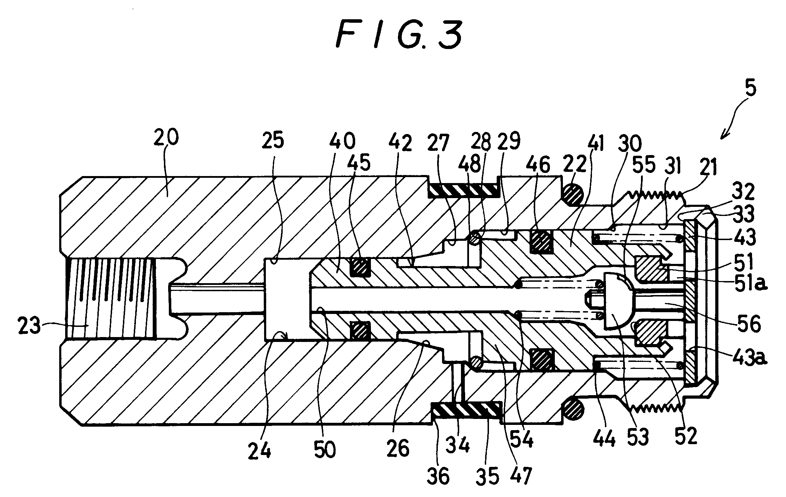

The details of the pulsating-pressure absorbing apparatus 4 and 5 will be described with reference to Figures 2 and 3. The apparatus 4 is similar to the apparatus 5 in construction, and accordingly only the apparatus 5 will be described hereinafter.

In the pulsating-pressure absorbing apparatus 5, a main body 20 is fixed by threaded coupling to the outlet portion 3a of the tandem master cylinder 3, at a threaded portion 21 of the main body 20. A seal ring 22 is fitted to the main body 20 at a stepped portion near the threaded portion 21. The pulsating-pressure absorbing apparatus 5 can then be fixed to the outlet portion 3a of the tandem master cylinder in a fluid-tight manner by the seal ring 22.

A connecting hole 23 for the conduit portion 7a (Figure 1) is formed at the opposite end to the threaded portion 21 in the main body 20. A stepped hole 24 communicating with the connecting hole 23 and aligned with the latter is formed in the main body 20, with its diameter decreasing in steps towards the connecting hole 23. A small diameter hole portion 25 is nearest to the connecting hole 23. An intermediate diameter hole portion 27 is formed continuously through a stepped portion 26. A tapered portion 28 and a first large diameter portion 29 are continuously formed at the right side of the intermediate-diameter hole portion 27. Further, a second tapered portion 30 and a second large diameter hole portion 31 are continuously formed at the right side of the first large diameter hole portion 29. An opening end portion 33 is formed through a stepped portion 32 next to the second large diameter hole portion 31.

A radial path 34 is formed in communication with the intermediate diameter hole portion 27 in the main body 20. An annular groove 36 is formed in communication with the radial path 34 in the peripheral wall of the main body 20. A rubber cover ring 35 is fitted to the annular groove 36 thereby closing the radial path 34, so that foreign material such as dust particles can be prevented from entering the interior of the main body 20 from the outside. However, the ring 35 permits fluid and air to flow to the outside.

A stepped plunger 42 is slidably fitted into the stepped hole 24 of the main body 20. Rubber seal rings 45 and 46 are tightly fitted to the stepped plunger 42 at a smaller diameter portion 40 and a larger diameter portion 41 respectively, which portions are respectively slidably fitted within the smaller diameter hole portion 25 of the stepped hole 24 and the first large diameter hole portion 29 thereof.

The opening end portion 33 of the main body 20 is caulked and deformed as shown. A disc 43 having holes 43a therein is fixed at the deformed opening end portion 33. A return spring 44 is compressedly fitted between the disc 43 and the large diameter portion 41 of the stepped plunger 42. Accordingly, the stepped plunger 42 is urged towards the connecting hole 23. The spring force of the return spring 44 is weak, but is sufficient to overcome the slide resistance of the seal rings 45 and 46 against the inside wall of the main body 20. In the stepped plunger 42, an intermediate portion 47 is formed adjacent the larger portion 41. The diameter of the intermediate portion 47 is slightly smaller than that of the intermediate hole portion 27 of the stepped hole 24.

A C-shaped spring member 48 made of spring wire material is arranged between the intermediate hole portion 27 of the stepped hole 24 and the intermediate portion 47 of the stepped plunger 42, and is shown under substantially natural uncompressed conditions (namely, at its natural diameter) in Figure 3. In the natural condition, the outer diameter of the spring member 48 is the diameter of the intermediate hole portion 27 of the stepped hole 24. The inner diameter thereof is slightly smaller than the diameter of the intermediate portion 47 of the stepped plunger 42. The spring force of the spring member 48 is sufficiently large that it cannot be easily deformed by the spring force of the return spring 44. Until a strong pushing force towards the connecting hole 23 is applied to the stepped plunger 42, the C-shaped spring member 48 is engaged with the tapered stepped portion 28 of the stepped hole 24 and the shoulder portion of the intermediate portion 47 of the stepped plunger 42, so that the stepped plunger 42 can be held at the rightmost position, as shown in Figure 3. When a strong pushing force is applied leftwards to the stepped plunger 42, the C-shaped spring member 48 is moved along the tapered stepped portion 28, and is so deformed that the diameter of the spring member 48 is decreased until it finally comes into contact with the stepped portion 26 as shown in Figure 2. Hereafter, the C-shaped spring member 48 is maintained at the stepped portion 26 as shown in Figure 2. The spring member 48 has no influence on the normal braking operation. When the stepped plunger 42 is moved leftwards during normal braking operation, the spring member 48 and the plunger 42 merely come into contact with each other. Thus the spring member 48 functions only as a contact portion for the plunger 42.

A stepped through-hole 50 is axially formed in the plunger 42. A cylindrical valve seat member 51 is fixed to the right opening end of the stepped through-hole 50 by caulking. The inner peripheral edge portion of the valve seat member 51 functions as a valve seat 52. A poppet-type valve body 53 is arranged in the stepped through-hole 50 facing towards the valve seat 52, and is urged against the valve seat 52 by a valve spring 54, the spring force of which is weak. Accordingly, the valve body 53 normally contacts with the valve seat 52.

Cut-out paths 51a are formed in the end of the valve seat member 51. The valve seat member 51 and the valve body 53 are made of metallic material of the iron group, and they are hardened by a quenching treatment during manufacture so as to provide considerable hardness. A throttle cut-out groove 55 is formed in the head portion of the valve body 53 contacting with the valve seat 52. It has a V-shaped or U-shaped cross-section, the area of which corresponds to that of a circular cross-section of about 3 to 5mm diameter. The area and shape of the throttle cut-out groove 55 are selected in accordance with the required absorbing effect.

A rod portion 56 is formed integrally with the valve body 53 so as to pass through the valve seat member 51. When the stepped plunger 42 is moved into contact with the disc 43 against the return spring 44, the rod portion 56 of the valve body 53 also contacts the disc 43. Accordingly, the valve body 53 is separated from the valve seat 52. The length of the rod portion 56 of the valve body 53 is sufficient to obtain a required separation distance or valve lift between the valve body 53 and the valve seat 52. It is preferable that the flow resistance within the valve lift is as low as that of a normal conduit such as the conduit portion 7a. The ratio of the effective pressure-receiving area of the smaller-diameter portion 40 at the side of the connecting hole 23 to the effective pressure-receiving area of the larger-diameter portion 41 at the side of the master cylinder 3 in the plunger 42 is 1:2. Assuming that a static pressure of 50 kgf/cm² is applied to the plunger 42, the plunger is not moved unless the pulsating pressure at the side of the connecting hole 23 becomes higher than 50 kgf/cm². The ratio of the effective pressure-receiving area of the smaller-diameter portion to the effective pressure receiving area of the larger-diameter portion is suitably selected by the width of the pulsating pressure depending on the kind of vehicle to be provided with the apparatus.

The operation of the anti-skid braking system 1 will now be described.

When the brake pedal 2 is depressed, fluid pressure is generated in the fluid pressure chambers of the tandem master cylinder 3, and is supplied through the pulsating-pressure receiving apparatus 4 and 5 to the conduits 6 and 7. The anti-skid control valve 10 assumes the position A for increasing braking. Accordingly, fluid pressure is supplied to the wheel cylinders 8a and 9a of the rear wheels 8 and 9 and also to the wheel cylinders (not shown) of the front wheels, and the wheels are braked.

If the wheels begin to skid and the control unit 13 judges that the brakes of the wheels should be relieved, the control unit 13 supplies a brake-decreasing instruction to the valve 10 and a motor drive signal to the motor 14. The pressure at the master cylinder side of the control valve 10 increases in accordance with the force applied to the brake pedal 2. However, since the control valve 10 has changed over to the position C as a result of the brake-relieving or decreasing instruction, a proportion of the brake fluid supplied to the wheel cylinders 8a and 9a is discharged into the brake relieving circuit 11 through the control valve 10. When the wheels have stopped skidding, the control unit 13 stops the brake-relieving instruction and generates a brake holding or maintaining instruction. Thus, the valve 10 is changed over to the position B for maintaining braking. The fluid pressures of the wheel cylinders 8a and 9a are then maintained constant.

The fluid pressure pump 15 is driven by the motor 14, and pressurises and returns the brake fluid discharged from the wheel cylinders 8a and 9a through the control valve 10, to the master cylinder side. When the fluid pressure pump 15 is of the plunger type, the fluid is intermittently supplied with pulsating pressure to the conduit portion 7a. However, the pulsating pressure is absorbed and then the brake fluid is returned to the master cylinder 3.

After the wheels have been released from the skid conditions and the rotational speeds of the wheels are properly restored, the control unit 13 changes over the valve 10 to the position A for increasing braking, and the brake fluid is supplied from the master cylinder 3 into the wheel cylinders 8a and 9a. The braking forces to the wheels can now increase. The valve 10 has now been changed over since the wheels do not skid. The decrease, maintaining and increasing of the fluid pressure are repeated in accordance with the instructions from the control unit 13. When the brake pedal 2 is released, the brake fluid is returned through the check valve 16 from the wheel cylinders 8a and 9a to the master cylinder 3. It is returned also through the control valve 10 after the end of the anti-skid control.

The operation of the pulsating-pressure absorbing apparatus 5 during anti-skid control will now be described.

Figure 2 shows the apparatus 5 in the stationary condition, when the brake is applied and also when the brake is not applied.

When the brake is not applied, there is no fluid pressure applied to the stepped plunger 42 which thus contacts at the intermediate diameter portion 47 with the stepped portion 26 through the spring member 48 by the urging force of the spring 44. Accordingly, the rod portion 56 of the valve body 53 is separated from the disc 43, and the valve body 53 contacts the valve seat 52.

In the condition shown in Figure 2, when pressurised fluid is supplied from the master cylinder 3, it separates the valve body 53 from the valve seat 52, and it flows through the through-hole 50. Since the fluid-pressure receiving area of the plunger 42 is larger at the side connecting with the master cylinder 3 than at the side connecting with the conduit portion 7a, the plunger 42 is not moved from the illustrated position.

When the anti-skid operation starts, the discharging pulsating pressure of the fluid pressure pump 15 is transmitted into the connecting hole 23. With respect to the valve body 53, the fluid pressure at the side of the connecting hole 23 is higher than the fluid pressure at the master cylinder side. Accordingly, brake fluid flows from the connecting hole 23 towards the master cylinder 3 through the throttle groove 55. At this time, the pulsating pressure is attenuated by the throttling effect of the throttle groove 55. The pulsating pressure of the fluid pressure pump 15 includes the pressure increase due to the fluid returned to the master cylinder 3. However, the plunger 42 is not moved against the return spring 44, since there is the predetermined difference between the pressure-receiving areas on opposite sides of the plunger 42. Accordingly, the pulsating pressure due to the movement of the plunger 42 is prevented from generating, and the pulsating pressure of the brake fluid from the fluid pressure pump 15 is attenuated, with the brake fluid from the fluid pressure pump 15 returning to the master cylinder 3. Although the brake pedal 2 is pushed back by the returning fluid, the pedal feeling is considerably improved, since the pulsating pressure is greatly attenuated.

When the brake pedal 2 is released, the pressure inside the master cylinder 3 rapidly decreases and becomes negative. At the same time, the pressure at the master cylinder side of the control valve 10 decreases considerably with respect to the throttle groove 55. As the occasion demands, the fluid pressure becomes negative. The plunger 42 rapidly moves to the right. The rod portion 56 of the valve body 53 contacts the disc 43, and the valve seat member 51 also contacts the disc 43. Thus, the valve body 53 is separated from the valve seat 52. The brake fluid returns freely through the large gap between the valve body 53 and the valve seat 52 into the master cylinder 3. Accordingly, although a special check valve is not used, the brake can still be rapidly relieved.

When the brake has been completely relieved, the plunger 42 returns to the original position as shown in Figure 2 by the urging force of the return spring 44.

The operation during assembly of the pulsating-pressure absorbing apparatus 5 in the vehicle braking system will now be described, with reference to Figure 3.

Following assembly, air is generally replaced by brake fluid in the respective parts of the brake apparatus by an air bleeding operation. In this embodiment, an air bleeding operation termed a "vacuum bleeding method" is used. Air is withdrawn under vacuum from the opening of the hydraulic reservoir provided in the master cylinder 3 by a vacuum pump. When sufficient air has been extracted and the degree of vacuum is high, brake fluid to which back-pressure is applied is introduced into the braking system.

In the air bleeding operation, if air flows towards the master cylinder 3 only through the throttle groove 55, the operation will take a long time. The air flow time can be shortened by operation of the spring member 48.

The pulsating-pressure absorbing apparatus 5 is in the state shown in Figure 3 immediately after assembly in a vehicle. The intermediate diameter portion 47 of the plunger 42 is engaged through the spring member 48 with the tapered step portion 28 of the stepped hole 24. The plunger 42 is positioned so that the valve seat member 51 fixed to the end of the plunger 42 contacts or is separated slightly from the disc 43. The rod portion 56 of the valve body 53 contacts the disc 43. Accordingly the valve body 53 is further separated from the valve seat 52.

When the air-bleeding operation of the vacuum bleeding method is effected in the situation shown in Figure 3, air flows rapidly from the side of the conduit 7 towards the master cylinder 3 through the large gap between the valve body 53 and the valve seat 52. After sufficient air has been extracted, brake fluid under back pressure is supplied into the pulsating-pressure absorbing apparatus 5. The pressure of the brake fluid is applied to the larger diameter portion 41 of the plunger 42. Thus, the plunger 42 is pushed strongly towards the connecting hole 23. The spring member 48 is moved along the tapered step portion 28. It is so deformed and compressed that its outer diameter is decreased so as to be substantially equal to the diameter of the intermediate hole portion 27. As a result, the spring member 48 is pushed so that it contacts with the stepped portion 26. At the same time, the inside of the brake apparatus is filled with brake fluid to which back pressure is applied, and thus the air-bleeding operation is finished.

While the preferred embodiment of the invention has been described, a number of variations are possible, some of which will now be described.

For example, a low-pressure accumulator or a hydraulic reservoir may be arranged at the suction side of the fluid pressure pump 15 for reserving the brake fluid discharged through the control valve 10 from the wheel cylinders 8a and 9a.

In the above embodiment, one three-position, three-port electromagnetic valve is used as the anti-skid control valve 10. Instead, two two-position, two-port electromagnetic valves may be used.

Further, a frictional ring may be fitted at the predetermined position instead of the spring member 48. In that case, it is preferable that the frictional ring should be made of synthetic resin for damping the impact force and preventing impact noise on contacting the plunger 42.

Also, the disc 43 having plural holes 43a may be coated with rubber film or film of synthetic resin in order to damp the impact force and noise on impact of the plunger 42 and the valve body 53 with the disc 43. Alternatively, any one of the plunger 42, valve body 53 and disc 43 may be made of the so-called "vibration-absorbing" or "shock-absorbing" steel including a high proportion of copper, lead or the like. In this case, it is preferable that the disc 43 should be made of the shock-absorbing steel. A noise-preventing plate may instead be arranged adjacent the disc 43 at the side of the plunger 42.

Further in the above embodiment, the plunger 42 is urged towards the connecting hole 23 by the return spring 44, and so the plunger 42 is normally located at the outlet side, namely at the side of the connecting hole 23. Instead, the return spring 44 may be omitted so that the plunger moves freely in response to the fluid pressure difference or the flow of brake fluid. In that case, there may be no difference between the right and left fluid-pressure receiving areas of the plunger 42. The plunger or other movable member may as a further alternative be urged towards the side of the connecting hole 23 by a relatively strong spring, and again there may be no difference between the right and left pressure-receiving areas of the plunger.

As described above, the valve body 53 with the throttle groove 55 is assembled within the plunger 42. Instead, a valve body with a throttle groove mav be independently arranged at the side of the outlet or inlet of the main body 20 so that it is operated in response to movement of the plunger 42.

## Claims

1. A braking system for a vehicle, comprising:
a brake fluid pressure generating source (3);
a brake-applying apparatus (8a, 9a) for braking a wheel or wheels (8,9) in response to brake fluid pressure supplied from said pressure generating source; and
a pulsating-pressure absorbing apparatus (5) arranged between the pressure generating source and the brake-applying apparatus, the absorbing apparatus comprising a main body (20) having an inlet (33) towards the generating source and an outlet (23) towards the brake-applying apparatus, a passageway (24) in the body between the inlet and outlet, a plunger (42) slidably fitted in the passageway, and moveable in response to a brake fluid pressure difference between opposite ends of the plunger, a valve member (53) mounted in an axial hole in the plunger, a valve seat (52) cooperating with the valve member, and throttling means (55) for limiting brake fluid flowing from the brake-applying apparatus to the pressure generating source;
characterised in that:
the valve seat (52) is fixed to the plunger (42);
the throttling means is formed by a cut-out groove (55) between the valve member (53) and the valve seat (52);
when the plunger (42) is disposed in a first position towards the outlet, the valve member (53) contacts the valve seat (52) so that the cut-out groove (55) functions as a throttle; and
when the plunger (42) is disposed in a second position towards the inlet, the valve member (53) and valve seat (52) are separated.

2. A system as claimed in claim 1, wherein the absorbing apparatus is fixed to an outlet (3a) of the pressure generating source.

3. A system as claimed in claim 1 or 2, further comprising an anti-skid control valve apparatus (10) arranged between the pressure generating source and the brake-applying apparatus, and a fluid pressure pump (15) arranged to return fluid discharged by the control valve apparatus to a point between the control valve apparatus and the absorbing apparatus.

4. A system as claimed in any preceding claim, wherein the absorbing apparatus further comprises holding means (48) for holding the plunger in said second position before the braking system is initially filled with brake fluid.

5. A system as claimed in claim 4, wherein the holding means comprises a C-shaped spring member (48) which is engageable with the plunger and a stepped portion (27) of the passageway.

## Patentansprüche

1. Bremssystem für ein Fahrzeug mit:
einer Druckerzeugungsquelle (3) für ein Bremsfluid,
einer Bremsenanlegevorrichtung (8a, 9a) für das Bremsen eines Rades oder von Rädern (8, 9) unter Ansprechen auf den Bremsfluiddruck, der von der Druckerzeugungsquelle zugeführt wird,
und mit einem pulsierenden Druck absorbierenden Gerät (5), das zwischen der Druckerzeugungsquelle und der Bremsanlegevorrichtung angeordnet ist, wobei das absorbierende Gerät einen Hauptkorpus (20) aufweist, der einen Einlaß (33) in Richtung auf die Erzeugungsquelle und einen Auslaß (23) in Richtung auf die Bremsenanlegevorrichtung hat, einen Durchgang (24) in dem Korpus zwischen dem Einlaß und dem Auslaß hat, sowie einen Kolben (42), der gleitbar in den Durchgang eingepaßt ist und unter Ansprechen auf eine Bremsfluiddruckdifferenz zwischen den gegenüberliegenden Enden des Kolbens bewegbar ist, ein Ventilteil (53) hat, das in einer axialen Bohrung in dem Kolben montiert ist, einen Ventilsitz (52), der mit dem Ventilteil zusammenwirkt, und eine Drosseleinrichtung (55) hat, um das Strömen von Bremsflüssigkeit von der Bremsenanlegevorrichtung zu der Druckerzeugungsquelle zu begrenzen,
dadurch gekennzeichnet, daß
der Ventilsitz (52) an dem Kolben (42) fixiert ist,
die Drosseleinrichtung durch eine ausgeschnittene Nut (55) zwischen dem Ventilteil (53) und dem Ventilsitz (52) gebildet wird,
daß, wenn der Kolben (42) in einer ersten Position in Richtung des Auslasses angeordnet ist, das Ventilteil (53) mit dem Ventilsitz (52) in Kontakt tritt, so daß die ausgeschnittene Nut (55) als Drossel funktioniert,
und daß dann, wenn der Kolben (42) in einer zweiten Position in Richtung auf den Einlaß angeordnet ist, das Ventilteil (53) und der Ventilsitz (52) voneinander getrennt sind.

2. System nach Anspruch 1, wobei das Absorptionsgerät an einem Auslaß (3a) der Druckerzeugungsquelle fixiert ist.

3. System nach Anspruch 1 oder 2, welches weiterhin eine Antiblockiersteuerventilvorrichtung (10) aufweist, welche zwischen der Druckerzeugungsquelle und der Bremsenanlegevorrichtung angeordnet ist, sowie eine Fluiddruckpumpe (15), die so angeordnet ist, daß sie Fluid, welches von der Steuerventilvorrichtung abgegeben wird, an einen Punkt zwischen der Steuerventilvorrichtung und dem Absorptionsgerät zurückführt.

4. System nach einem der vorstehenden Ansprüche, wobei das Absorptionsgerät weiterhin eine Halteeinrichtung (48) aufweist für das Halten des Kolbens in einer zweiten Position, bevor das Bremssystem anfänglich mit Bremsfluid gefüllt ist.

5. System nach Anspruch 4, wobei die Halteeinrichtung ein C-förmiges Federteil (48) aufweist, welches mit dem Kolben und einem Stufenabschnitt (27) des Durchganges in Eingriff bringbar ist.

## Revendications

1. Système de freinage pour véhicule, comprenant :
une source de pression de liquide de frein (3);
un dispositif de freinage (8a, 9a) pour freiner une roue ou des roues (8, 9) en réponse à la pression de liquide de frein fournie par ladite source de pression; et
un dispositif (5) d'absorption de pression pulsée disposé entre la source de pression et le dispositif de freinage, le dispositif d'absorption comprenant un corps principal (20) comportant une entrée (33) vers la source de pression et une sortie (23) vers le dispositif de freinage, un passage (24) dans le corps entre l'entrée et la sortie, un plongeur (42) ajusté de manière à coulisser dans le passage, et mobile en réponse à une différence de pression de liquide de frein entre les extrémités opposées du plongeur, une soupape (53) montée dans un trou axial dans le plongeur, un siège de soupape (52) coopérant avec la soupape, et un moyen d'étranglement (55) pour limiter le flux de liquide de frein du dispositif de freinage à la source de pression;
caractérisé en ce que :
le siège de soupape (52) est fixé au plongeur (42);
le moyen d'étranglement est formé par une gorge découpée (55) entre la soupape (53) et le siège de soupape (52);
lorsque le plongeur (42) est disposé dans une première position vers la sortie, la soupape (53) contacte le siège de soupape (52) de manière que la gorge découpée (55) serve d'étrangleur; et
lorsque le plongeur (42) est disposé dans une seconde position vers l'entrée, la soupape (53) et le siège de soupape (52) sont séparés.

2. Système selon la revendication 1, dans lequel le dispositif d'absorption est fixé à une sortie (3a) de la source de pression.

3. Système selon la revendication 1 ou 2, comprenant en outre un dispositif à soupape de commande d'anti-patinage (10) disposé entre la source de pression et le dispositif de freinage, et une pompe de pression de fluide (15) agencée pour ramener le fluide déchargé par le dispositif à soupape de commande jusqu'à un emplacement entre le dispositif à soupape de commande et le dispositif d'absorption.

4. Système selon l'une quelconque des revendications précédentes, dans lequel le dispositif d'absorption comprend en outre un moyen de fixation (48) pour maintenir le plongeur dans ladite seconde position avant que le système de freinage soit rempli pour la première fois de liquide de frein.

5. Système selon la revendication 4, dans lequel le moyen de retenue comprend un ressort (48) en forme de C qui peut être engagé avec le plongeur et une portion à gradins (27) du passage.
